# EUROPÄISCHE PATENTSCHRIFT

(11) **EP 2 615 344 B1**
(45) Veröffentlichungstag und Bekanntmachung des Hinweises auf die Patenterteilung: **01.08.2018**
(21) Anmeldenummer: 12196934.9
(22) Anmeldetag: 13.12.2012
(51) Int. Cl.: F16L 23/04, F16K 11/00, F16L 23/08, F16L 41/02

(54) **Vorrichtung zur modularen Bildung von Rohrkreuzungen**
Device for modular construction of pipe crossings
Dispositif pour la formation modulaire de croix en tubes

(30) Priorität: 12.01.2012 AT 262012
(43) Veröffentlichungstag der Anmeldung: 17.07.2013
(73) Patentinhaber: E. Hawle Armaturenwerke GmbH, 4840 Vöcklabruck (AT)
(72) Erfinder: Jodlbauer, Johann, 4844 Regau (AT)
(74) Vertreter: Puchberger & Partner Patentanwälte

(56) Entgegenhaltungen:
- WO-A2-2012/081025
- FR-A1- 2 745 886
- US-A1- 2011 154 646

## Beschreibung

Die Erfindung betrifft eine Vorrichtung zur modularen Bildung von Rohrkreuzungen umfassend einen Verteilerkörper, der zumindest drei bevorzugt fünf über einen Verteilerraum miteinander verbundene Verteileröffnungen aufweist, die mit Anbauöffnungen von Anbaukomponenten wie beispielsweise Schiebern, Deckeln, Rohren, Hydranten oder ähnlichem verbindbar sind,
wobei zumindest eine Verteileröffnung von einer Verteilerstirnfläche und zumindest eine Anbauöffnung von einer Anbaustirnfläche umgeben ist, wobei zur Verbindung der Anbaukomponente mit dem Verteilerkörper Verbindungsmittel zur beabstandeten Positionierung der Anbaustirnfläche zur Verteilerstirnfläche und eine Dichtverbindungsanordnung vorgesehen sind.

Vorrichtungen zur Bildung von Rohrkreuzungen sind seit langer Zeit bekannt und in unterschiedlichen Ausführungen publiziert.

Bei der Installation von Wasserversorgungsleitungen müssen zur Verteilung des transportierten Wassers Abzweigungen vorgesehen werden. Ein Beispiel dafür ist, dass von einer Hauptversorgungsleitung für eine angrenzende Gemeinde ein Teilmassenwasserstrom entnommen wird. Zu diesem Zweck wird im Bereich der Wasserleitung ein Schacht ausgehoben und eine Vorrichtung zur Bildung der Rohrkreuzung eingesetzt.

Dem Stand der Technik entsprechende Rohrkreuzungen weisen beispielsweise vier in einer waagrechten Ebene 90° zueinander verdrehte Öffnungen auf. Die kreuzförmig angeordneten Verteileröffnungen sind jeweils durch einen Schieber verschließbar oder teilweise verschließbar. Dazu besteht das Gehäuse der gesamten Vorrichtung aus einem einzelnen Gusskörper, der sowohl den Verteilerkörper als auch die Gehäuse der einzelnen Schieber umfasst. Derartige Gussteile sind in ihrer Herstellung aufwendig und teuer. Bei der Wasserversorgung kommen Rohrleitungsdurchmesser von über 800mm zum Einsatz. Die Vorrichtungen zur Bildung von Rohrkreuzungen derartiger Wasserleitungen sind daher aufgrund ihres Gewichtes und ihrer Abmaße aufwändig zu transportieren. Da Wasserleitungen auch in abgelegenen Gebieten verlegt werden, ist durch die große, schwere Ausgestaltung der Vorrichtungen auch die Montage erschwert.

Um diesen Nachteil zu überwinden werden Rohrkreuzungsvorrichtungen verwendet, bei denen ein zentrales Verteilergehäuse über Flansche mit separaten Schiebern verbunden wird. Die Flansche des Verteilergehäuses und der Schieber werden plan aufeinander gelegt und über Schraubverbindungen miteinander verbunden. Die Richtung der Schrauben verläuft dabei im Wesentlichen parallel zur Haupterstreckungsrichtung oder zur Symmetrieachse der angeschlossenen Rohre. Nachteilig an dieser Konstruktion ist, dass die Flansche über eine Vielzahl am Umfang verteilter Schrauben miteinander verbunden werden müssen. Derartige Rohrverbindungsvorrichtungen sind meist in engen Schächten mit einer Tiefe von 1m bis über 2m positioniert. Das Festziehen der Muttern und Schraubenköpfe, insbesondere an der Unterseite der Flansche ist darum sehr umständlich. FR 2 745 886 A offenbart eine Vorrichtung zur modularen Bildung von Rohrkreuzungen umfassend einen Verteilerkörper, der zumindest drei über einen Verteilerraum miteinander verbundene Verteileröffnungen aufweist, die mit Anbauöffnungen von Anbaukomponenten verbindbar sind,wobei zumindest eine Verteileröffnung von einer Verteilerstirnfläche und zumindest eine Anbauöffnung von einer Anbaustirnfläche umgeben ist, wobei zur Verbindung der Anbaukomponente mit dem Verteilerkörper Verbindungsmittel geeignet zur beabstandeten Positionierung der Anbaustirnfläche zur Verteilerstirnfläche und eine Dichtverbindungsanordnung vorgesehen sind. Diese Vorrichtung entspricht dem Oberbegriff des Anspruchs 1. Die WO 2003 004 924 A1 zeigt eine Rohrverbindungsvorrichtung, bei der der Flansch eines Verteilerkörpers über Klemmringe mit einem Adapter verbunden werden kann. Diese Vorrichtung ist nicht dazu geeignet, die erfindungsgemäßen Aufgaben zu lösen, da die jeweiligen Komponenten, die miteinander verbunden werden sollen, direkt aneinander anliegen und somit keinen dazwischenliegenden, freigehaltenen Spalt aufweisen.

Die US 2005 006 150 A1 zeigt ein Rückspulventil für Rohrleitungssysteme. Die Konstruktion umfasst zwei zu verbindende Flansche, wobei in beiden Flanschen jeweils eine ringförmige Nut vorgesehen ist. Zur Verbindung wird in diese Ringnut eine starre Ringdichtung eingelegt. Diese zentriert die beiden Flansche zueinander und dichtet die Verbindungsstelle ab. Die beiden Flansche werden ferner über Schraubenelemente zueinander gezogen, womit die Dichtung in den beiden Ringnuten gequetscht wird. Um erfindungsgemäß eine Austauschbarkeit der Komponenten zu ermöglichen, muss die Anbaukomponente in radialer Richtung zur Rohrmittelachse entfernt werden können. Die Konstruktion der US 2005 006 150 A1 ermöglicht dies jedoch nicht.

Die CN 201 372 810 Y zeigt die grundsätzliche Konstruktion einer Rohrkreuzung mit angebauten Absperrelementen. Das Freihalten eines Spaltes ist dem Dokument jedoch nicht zu entnehmen.

Die DE 3 631 027 A1 zeigt eine Rohrverbindung mit einem Dichtungsring und einem Spannring wie er bei Kunststoffrohren kleiner Dimension eingesetzt wird. Jedoch zeigt auch diese Vorrichtung keinesfalls das Freihalten eines Spaltes.

Ein weiterer Nachteil der dem Stand der Technik entsprechenden Rohrkreuzungsvorrichtungen ist, dass ein Wechsel der Anbaukomponenten - beispielsweise der Schieber - am Einsatzort nicht möglich ist. Grund dafür ist, dass durch Versetzungen im Erdreich, Wärmespannungen oder Kältespannungen der langen angeschlossenen Rohrleitungen die Schieber zwischen dem Verteilerkörper und dem Rohr eingeklemmt sind. Dabei treten hohe Kräfte auf. Um nun beispielsweise einen Schieber nachträglich zu entfernen, müssen alle Verschraubungen des Flansches geöffnet werden. Der eingeklemmte Schieber muss mit großer Kraftanstrengung aus der Einbaustelle entfernt werden. Ist der Schieber entfernt, so geben die elastisch verformten Rohre nach, wodurch die Flansche einige Millimeter aneinanderrücken. Das Einsetzen des neuen Schiebers, der im Wesentlichen dieselbe Dimension aufweist, ist dadurch erschwert.

Aufgabe der vorliegenden Erfindung ist es nun, eine Vorrichtung zur modularen Bildung von Rohrkreuzungen zu schaffen, die die Nachteile des Standes der Technik überwindet, die insbesondere flexibel, modular aus leicht handzuhabenden Komponenten zusammengesetzt ist, die die nachträgliche Austauschbarkeit der Anbaukomponenten wie Schieber etc. ermöglicht und vereinfacht, die die Bedienung und Montage von der Oberseite ermöglicht und die den geltenden Normen und Sicherheitsverordnungen des entsprechenden Einsatzgebietes entspricht.

Die erfindungsgemäßen Aufgaben werden insbesondere dadurch gelöst, dass die Verbindungsmittel Abstandselemente umfassen, die über Verbindungselemente starr verbunden werden können,dass zwischen dem Verteilerkörper und der Anbaukomponente ein Spalt freigehalten ist und dass die Dichtverbindungsanordnung einen Dichtring umfasst, der den Spalt umfangsseitig umgibt.

Ferner sind vorteilhafte Merkmale der Erfindung, dass zwischen dem Verteilerkörper und einer Anbaukomponente und/oder zwischen der Anbaustirnfläche und der Verteilerstirnfläche ein Spalt vorgesehen ist, dass zur Abdichtung des Spaltes und gegebenenfalls zur Positionierung der Anbaukomponente gegenüber dem Verteilerkörper die Dichtverbindungsanordnung vorgesehen ist, dass die Dichtverbindungsanordnung einen Dichtring umfasst, der den Spalt umfangsseitig umgibt und/oder dass der Dichtring einen Dichtfortsatz umfasst, der in montierter Stellung zumindest teilweise in den Spalt ragt.Weitere Merkmale der Erfindung sind beispielsweise, dass der Dichtring einen Dichtkörper umfasst, der in montierter Stellung den Verteilerkörper und die Anbaukomponente umfangsseitig berührt und/oder dass der Dichtring ein aus dem Dichtfortsatz und dem Dichtkörper gebildetes T-förmiges Profil aufweist, wobei der Dichtkörper hohlzylinderförmig ausgebildet ist, und der Dichtfortsatz an der Innenseite der Einbaustelle entfernt werden. Ist der Schieber entfernt, so geben die elastisch verformten Rohre nach, wodurch die Flansche einige Millimeter aneinanderrücken. Das Einsetzen des neuen Schiebers, der im Wesentlichen dieselbe Dimension aufweist, ist dadurch erschwert.

Aufgabe der vorliegenden Erfindung ist es nun, eine Vorrichtung zur modularen Bildung von Rohrkreuzungen zu schaffen, die die Nachteile des Standes der Technik überwindet, die insbesondere flexibel, modular aus leicht handzuhabenden Komponenten zusammengesetzt ist, die die nachträgliche Austauschbarkeit der Anbaukomponenten wie Schieber etc. ermöglicht und vereinfacht, die die Bedienung und Montage von der Oberseite ermöglicht und die den geltenden Normen und Sicherheitsverordnungen des entsprechenden Einsatzgebietes entspricht.

Die erfindungsgemäßen Aufgaben werden insbesondere dadurch gelöst, dass die Verbindungsmittel Abstandselemente umfassen, die über Verbindungselemente starr verbunden werden können,dass zwischen dem Verteilerkörper und der Anbaukomponente ein Spalt freigehalten ist und dass die Dichtverbindungsanordnung einen Dichtring umfasst, der den Spalt umfangsseitig umgibt.

Ferner sind vorteilhafte Merkmale der Erfindung, dass zwischen dem Verteilerkörper und einer Anbaukomponente und/oder zwischen der Anbaustirnfläche und der Verteilerstirnfläche ein Spalt vorgesehen ist, dass zur Abdichtung des Spaltes und gegebenenfalls zur Positionierung der Anbaukomponente gegenüber dem Verteilerkörper die Dichtverbindungsanordnung vorgesehen ist, dass die Dichtverbindungsanordnung einen Dichtring umfasst, der den Spalt umfangsseitig umgibt und/oder dass der Dichtring einen Dichtfortsatz umfasst, der in montierter Stellung zumindest teilweise in den Spalt ragt.Weitere Merkmale der Erfindung sind beispielsweise, dass der Dichtring einen Dichtkörper umfasst, der in montierter Stellung den Verteilerkörper und die Anbaukomponente umfangsseitig berührt und/oder dass der Dichtring ein aus dem Dichtfortsatz und dem Dichtkörper gebildetes T-förmiges Profil aufweist, wobei der Dichtkörper hohlzylinderförmig ausgebildet ist, und der Dichtfortsatz an der Innenseite des hohlzylinderförmig ausgebildeten Dichtkörpers mittig radial nach innen abstehend angeformt ist.

Erfindungsgemäß ist weiters vorgesehen, dass die Dichtverbindungsanordnung einen Klemmring umfasst, der den Spalt und zumindest teilweise den Verteilerkörper und die Anbaukomponente umfangsseitig in radialer Richtung umgreift, dass der Klemmring öffenbar ausgeführt ist und zumindest zwei C-förmige Segmente umfasst, die über Verbindungselemente im Wesentlichen starr miteinander verbindbar sind, dass die Segmente zusammengesetzt einen ringförmigen Körper bilden, dass die Segmente einander vervollständigend ausgeführt sind und/oder dass der Innendurchmesser des Klemmrings durch Betätigung der Verbindungselemente veränderbar ist, und dass durch Festziehen der Verbindungselemente der Dichtring zur Abdichtung des Spaltes gequetscht wird.

In vorteilhafter Weise kann vorgesehen sein, dass die Verbindungselemente des Klemmrings im Wesentlichen in einer Radialebene verlaufen und/oder bedienbar sind, dass die Verbindungsmittel Abstandselemente und Verbindungselemente umfassen, dass die Abstandselemente als Montagerahmen, Fortsatz, Lasche, an das Gehäuse der Anbaukomponente oder des Verteilerkörpers angegossener Fortsatz, mit dem Gehäuse der Anbaukomponente oder des Verteilerkörpers verbundener Fortsatz und/oder abstehender Steg ausgebildet sind, dass ein Montagerahmen vorgesehen ist, der über Verbindungselemente mit dem Verteilerkörper und mit zumindest einer, bevorzugt mit mehreren Anbaukomponenten verbindbar ist und/oder dass der Montagerahmen eine Befestigungsvorrichtung zu Befestigung der Vorrichtung am Untergrund aufweist.

Erfindungsgemäß ist eine Konstruktion zur Verbindung der Anbaukomponenten mit dem Verteilerkörper vorgesehen, die eine leichte Bedienbarkeit bei der ersten Installation wie auch bei der Wartung oder dem Austausch von Komponenten ermöglicht. So werden Verbindungsmittel eingesetzt, bei denen zwischen den Anbaukomponenten und dem Verteilerkörper ein Spalt freigehalten ist. Die Verteileröffnungen des Verteilerkörpers sind jeweils von einer Verteilerstirnfläche umgeben. Auch die Anbauöffnungen der Anbaukomponenten sind von einer Anbaustirnfläche umgeben. Diese beiden Stirnflächen entsprechen im Wesentlichen ringförmigen Flächen des Verteilerkörpers oder der Anbaukomponenten, die in einer Normalebene der Rohrachsen oder der Mittelachse der Öffnungen der Anbaukomponenten liegen. Die Rohrachsen entsprechen im Wesentlichen den Rotationsachsen oder den Mittelachsen der anzuschließenden Rohre und verlaufen paraiiei zu der Strömungsrichtung des in den Rohren und in den Anbaukomponenten strömenden Mediums. Die Rohrachsen verlaufen z.B. auch koaxial mit den Mittelachsen der Anbaukomponenten. Beispielsweise weist ein Schieber einen verschließbaren rohrförmigen Bereich auf, dessen Mittelachse im Wesentlichen der Rohrachse des angeschlossenen, außenliegenden Rohres entspricht.

Falls an eine Anbaukomponente ein Rohrkrümmer angeschlossen ist, so gilt als Rohrachse im Wesentlichen jene Achse, die dem Normalvektor der Querschnittsfläche entspricht. Im Falle des Bereichs des Spaltes, ist dies beispielsweise der Normalvektor der jeweiligen Verteileröffnung oder der jeweiligen Anbauöffnung, der durch den Schwerpunkt verläuft.

Über Verbindungsmittel werden die Anbaukomponenten mit dem Verteilerkörper verbunden, sodass ein gewisser Spalt bestehen bleibt. In bevorzugter Weise weisen die Verteilerstirnflächen zu den Anbaustirnflächen einen konstanten Abstand auf. Durch diese Verbindungsmittel sind die Anbaukomponenten relativ zum Verteilerkörper starr positioniert. Um den bestehenden Spalt abzudichten, werden getrennte Dichtverbindungsanordnungen vorgesehen.

Der Spalt beträgt beispielsweise 1 mm bis 10mm. Die Spaltbreite kann auch vom Durchmesser der zu verbindenden Öffnungen abhängen und beispielsweise zwischen einem Hundertstel und einem Vierhundertstel des Nenndurchmessers betragen.

Weitere Funktionen, die gegebenenfalls von der Dichtverbindungsanordnung übernommen werden, sind die Zentrierung und Positionierung der Anbaukomponenten zu dem Verteilerkörper.

Erfindungsgemäß kann der Klemmring derart ausgeführt sein, dass er keine direkten Berührungsstellen mit der Anbaukomponente und/oder dem Verteilerkörper aufweist. Zur Abdichtung bei festgezogenen Verbindungselementen ist der Klemmring an den Dichtring gedrückt. Dieser wiederum drückt auf den Verteilerkörper und auf die Anbaukomponente in dem abzudichtenden Bereich. Der Dichtring ist zwischen dem Klemmring und der abzudichtenden Stelle gequetscht, wobei keine direkte Berührung des Kiemmringes mit Verteilerkörper und/oder mit Anbaukomponente gegeben ist.

Zur Verbindung der Anbaukomponente mit dem Verteilerkörper können unterschiedliche Verbindungsmittel eingesetzt sein. Diese umfassen bevorzugt lösbare Verbindungen wie beispielsweise Schraubverbindungen, Steckverbindungen, Klemmverbindungen jedoch in Fällen, in denen die Komponenten nicht voneinander getrennt werden sollen, auch Schweißverbindungen, Klebeverbindungen oder ähnliches.

In einer besonders bevorzugten Ausführungsform umfassen die Verbindungsmittel Verbindungselemente und Abstandselemente. Die Abstandselemente sind als Laschen, Stege, Fortsätze oder ähnliches ausgebildet und umfassen Freistellungen zur Aufnahme der Verbindungselemente die beispielsweise als Schrauben-Mutter-Verbindung ausgeführt sind. Die Abstandselemente können dabei starr mit dem Gehäuse des Verteilerkörpers und/oder starr mit dem Gehäuse der Anbaukomponente verbunden sein. Desweiteren können die Abstandselemente durch einen Teil des Gehäuses des Verteilerkörpers und/oder einem Teil des Gehäuses der Anbaukomponente gebildet sein. Ferner können die Abstandselemente an den Verteilerkörper oder an die Anbaukomponente angegossen, angeschweißt, angeklebt etc. sein. Auch die Verbindung der Abstandelemente über Schraubverbindungen entspricht dem Erfindungsgedanken. Die Abstandselemente sind durch Verbindungselemente miteinander verbindbar, sodass die jeweilige Anbaukomponente mit dem Verteilerkörper starr verbunden ist. In bevorzugter Weise ist die starre Verbindung derart ausgeführt, dass zwischen dem Verteilerkörper und der Anbaukomponente ein gewisser Spalt freigehalten ist. Unter einer starren Verbindung wird in diesem Zusammenhang definiert, dass die Anbaukomponenten von dem Verteilerkörper ohne Öffnung oder Entfernung der Verbindungselemente nicht entfernt bzw. getrennt werden kann. Dabei kann die Verbindung jedoch ein gewisses Spie! aufweisen, sodass Bewegungen in kleinem Maße ermöglicht sind. Dies ist insbesondere dann vorteilhaft, wenn die Zentrierung der beiden Elemente: Verteilerkörper und Anbaukomponente über die Dichtverbindungsanordnung geschieht.

Auch eine Einstellbarkeit des Spaltes kann durch die Verbindungselemente der Verbindungsmittel gegeben sein. So kann beispielsweise über die Schraubverbindungen der Spalt in seiner Breite justiert werden. Ferner kann auch die Lage der Anbaukomponente zum Verteilerkörper in gewissem Maß bestimmt, justiert oder eingestellt werden. Möglichkeiten zur Veränderung des Abstandes sind das Beilegen von Beilagscheiben, das Vorsehen von Justiergewinden oder ähnliches.

Der Verteilerkörper umfasst in bevorzugter Weise vier Öffnungen die im Wesentlichen kreuzförmig angeordnet sind. Ferner ist eine weitere Verteileröffnung vorgesehen, deren Austritt normal auf jene Ebene steht, in der die Rohrachsen der Austritte der übrigen Verteileröffnungen liegen. In der Praxis verlaufen vier Rohrachsen im Wesentlichen waagrecht und sind jeweils 90° zueinander verdreht. Die Verteilerstirnflächen liegen im Wesentlichen in einer Normalebene der jeweiligen Rohrachse und stehen beispielsweise senkrecht. Die zusätzliche Öffnung ist beispielsweise für einen Hydranten, ein Steigrohr oder ähnliche Vorrichtungen vorgesehen. Die entsprechende Zusatzrohrachse verläuft somit im Wesentlichen vertikal.

Die Verbindungsmittel können einstückig mit dem jeweiligen Gehäuse des Verteilerkörpers oder der Anbaukomponente verbunden sein oder als separater, starr verbindbarer Montagerahmen ausgeführt sein. Auch Kombinationen eines Montagerahmens und einstückig verbundener Abstandselemente entsprechen dem Erfindungsgedanken.

Zur Montage der Vorrichtung können genormte Befestigungsvorrichtungen vorgesehen sein. So sind in den Schächten, in denen die Vorrichtung eingesetzt wird, Öffnungen zur Aufnahme von beispielsweise Montageschrauben vorgesehen, deren Abstand genormt ist. An diese Öffnungen wird die erfindungsgemäße Vorrichtung angeschraubt. Zu diesem Zweck weist auch die Vorrichtung eine Befestigungsvorrichtung auf, die ein Befestigen an den genormten Öffnungen ermöglicht. Dazu ist z.B. ein Montagerahmen vorgesehen, der einerseits der Montage der gesamten Vorrichtung im Schacht dient und der andererseits einen Teil der Verbindungsmittel, insbesondere der Abstandselemente bildet. Jedoch ist die erfindungsmäße Vorrichtung auch für den Erdeinbau geeignet, bei dem kein Schacht benötigt wird, und die Vorrichtung direkt in den Untergrund eingebettet ist.

In einer bevorzugten Ausführungsform ist ein Montagerahmen vorgesehen, der an dem Boden des Schachtes fest verschraubt werden kann. In weiterer Folge können der Verteilerkörper und die Anbaukomponenten mit dem Montagerahmen fest verbunden bzw. an diesen angeschraubt werden. Zur weiteren Abstützung werden die Anbaukomponenten über weitere Verbindungsmittel, die Verbindungselemente und Abstandselemente umfassen, verbunden.

Ein Vorteil des Montagerahmens ist die leichte Montierbarkeit an das Bodenfundament des Schachtes. So kann der Montagerahmen im unteren Bereich der Vorrichtung vorgesehen sein. In bevorzugter Weise ist der Montagerahmen unterhalb des Verteilerkörpers und der Anbauöffnungen vorgesehen und bildet somit die Basis der Vorrichtung. Durch die bodennahe Anordnung des Montagerahmens und/oder der Befestigungsvorrichtung ist eine leichte und stabile Verbindung zum Untergrund möglich. Auf beispielsweise lange Gewindestangen kann verzichtet werden. Grund dafür ist, dass der Montagerahmen auch außerhalb einer Teilungsebene der Gußkörper vorgesehen sein kann. Ferner kann ein Montagerahmen, wenn er kein Bestandteil des Verteilerkörpers oder des Gehäuses einer Anbaukomponente ist flexibler ausgestaltet werden. So können beispielsweise Laschen oder Öffnungen zur Montage an beliebigen Stellen vorgesehen sein. Sind derartige Befestigungsvorrichtungen ein Teil der zu verbindenden Gehäuse, so muß auf gußtechnische Gegebenheiten Rücksicht genommen werden.

Durch die erfindungsgemäße Anordnung entsteht ein starrer Verbund der Anbaukomponenten, des Verteilerkörpers und gegebenenfalls eine starre Verbindung mit dem Untergrund. Dieser starre Verbund setzt sich aus einzelnen, leicht handzuhabenden Komponenten zusammen.

Zur Abdichtung des Spaltes und gegebenenfalls zur Zentrierung und Fixierung der Verteileröffnung gegenüber der Anbauöffnung ist eine Dichtverbindungsanordnung vorgesehen. Diese Dichtverbindungsanordnung umfasst in bevorzugter Weise einen Klemmring sowie einen Dichtring. Der Dichtring ist beispielsweise als umlaufende eiastische Dichtung aus z.B. Gummi oder als O-Ring ausgeführt. Der Dichtring kann zur Montage auf das Ende der Anbaukomponente oder des Verteilerkörpers gesteckt werden. Nach Anbau der Anbaukomponente wird der Dichtring parallel zur Rohrachse über den Spalt geschoben. Der Dichtring verläuft umfangsseitig im Bereich der Verbindungsstelle. Umfangsseitig bedeutet in diesem Zusammenhang, dass die Dichtung an der Außenseite der zu verbindenden Rohrenden verläuft. Er dichtet somit den Spalt von außen ab. Als Rohrenden sind jene Endbereiche der Anbaukomponenten oder des Verteilerkörpers bezeichnet, die im Bereich der Verbindungsstelle miteinander verbunden werden. Dabei müssen diese Seiten nicht außenliegend ausgeführt sein, sondern können beispielsweise auch in Nuten eingelassen sein.

Beispielsweise kann der Dichtring als zylinderförmiger Gummiring ausgeführt sein, der um den gesamten Spalt herumläuft. Er berührt an seiner einen Seite umlaufend und umfangsseitig die Anbaukomponente und an seiner anderen Seite umlaufend und umfangsseitig den Verteilerkörper. In einer weiteren Ausführungsform kann der Dichtring T-förmig ausgeführt sein. In diesem Fall ist ein T-förmig abzweigender Bereich radial nach innen verlaufend ausgeführt. Dieser abzweigende Bereich erstreckt sich von der Umfangsseite in den Spalt. Er folgt somit im Wesentlichen dem Verlauf des Spaltes. Dieser Dichtfortsatz ist beispielsweise von einem Dichtkörper in radialer Richtung mittig abstehend angeformt oder mit diesem einstückig verbunden. Um den Dichtring in dieser Position zu fixieren sind mehrere Vorkehrungen getroffen. Einerseits weist der Dichtring in bevorzugter Weise einen kleineren Innendurchmesser auf als die jeweiligen Enden der zu verbindenden Komponenten. Somit ist der Dichtring leicht gedehnt und nach innen gedrückt. Ferner weist der Dichtring einen Zentrierfortsatz auf, der in bevorzugter Weise in den Spalt eingeführt werden kann um beispielsweise die Positionierung des Dichtrings über dem Spalt zu erleichtern. Ferner ist durch den Fortsatz die Dichtwirkung verbessert. Zur weiteren Fixierung des Dichtrings ist ein Klemmring vorgesehen. Dieser ist beispielsweise zweiteilig ausgeführt und besteht aus zwei C-förmigen Bogenelementen die jeweils wiederum ein C-förmiges Profil aufweisen. Der Klemmring kann durch die 2-teilige Ausführung geöffnet und geschlossen werden und um die beiden Enden der Komponenten sowie um den Dichtring herumgelegt werden. Durch eine Spannanordnung, beispielsweise Verbindungselemente wie eine Schraubverbindung wird der Dichtring fest um die Enden und/oder den Dichtring gepresst.

Bei größeren Nenndurchmessern wie beispielsweise über 300mm oder über 800mm können auch dreiteilige oder vierteilige Klemmringe vorgesehen sein. Teilungen von 180° oder 90° sind aus fertigungstechnischen Gründen vorteilhaft.

Durch das Vorsehen von Schultern und Fortsätzen, die die Schultern umgreifen ist der Klemmring gegebenenfalls auch dazu geeignet, die Öffnungen zueinander zu zentrieren und/oder zu positionieren sowie eine Auszugssicherung zu schaffen.

Der Klemmring ist radial bedienbar. Das bedeutet, dass das Öffnen und Schließen des Klemmrings in radialer Richtung, d.h. in Richtung der Normalebene auf die Rohrachse ermöglicht ist. Dazu sind die Verbindungselemente im Wesentlichen tangential angeordnet. Der Klemmring kann in bevorzugter Weise von oben - also durch Bedienung parallel zur Zusatzrohrachse geöffnet, entfernt, montiert und geschlossen werden.

Die Bedienung erfolgt dabei durch einen Freiraum, der zwischen den Anbaukomponenten und dem Verteilerkörper gegeben ist.

Um die Korrosionsbeständigkeit der erfindungsgemäßen Vorrichtung zu verbessern, ist die gesamte Vorrichtung und/oder sind die einzelnen Komponenten der Vorrichtung korrosionsbeständig ausgeführt. Im Falle von Gussteilen wie beispielsweise dem Schiebegehäuse, oder dem Gehäuse des Verteilerkörpers kann eine vollständige Beschichtung der Oberfläche des jeweiligen Körpers gegeben sein. Diese Beschichtung ist zwangsläufig an der gesamten Oberfläche vorgesehen, um Lochfraß zu verhindern. Auch im Bereich des Spaltes und/oder an der Verteilerstirnfläche und der Anbaustirnfläche ist eine Anti-Korrosionsbeschichtung vorhanden. Durch die erfindungsgemäße Verbindung der Anbaukomponenten mit dem Verteilerkörper sind keine außenliegenden bearbeiteten Flächen zur Herstellung einer Passung notwendig. Auch die Injektionsöffnung ist entlang ihrer gesamten Oberfläche beschichtet. Über Bajonettverschlüsse können die maßgeblichen Komponenten zur Injektion von beispielsweise Zusatzflüssigkeiten angebracht werden. Die Verbindungselemente sind bevorzugt aus rostfreiem Stahl oder ähnlichen rostfreien Materialien wie beispielsweise Messing, Kunststoff oder beschichtetem Gusseisen gebildet. Auch der Klemmring besteht oder umfasst Materialien, die korrosionsbeständig sind.

In weiterer Folge wird die vorliegende Erfindung anhand konkreter Ausführungsbeispiele und Zeichnungen weiter erörtert.
Fig. 1 zeigt eine Schrägansicht einer Ausführungsform der Vorrichtung zur modularen Bildung von Rohrkreuzungen.
Fig. 2 zeigt einen Schnitt einer möglichen Ausführungsform einer erfindungsgemäßen Vorrichtung.
Fig. 3 zeigt eine Schrägansicht eines erfindungsgemäßen Klemmrings und
Fig. 4 zeigt eine schematische Schnittdarstellung der Dichtverbindungsanordnung.

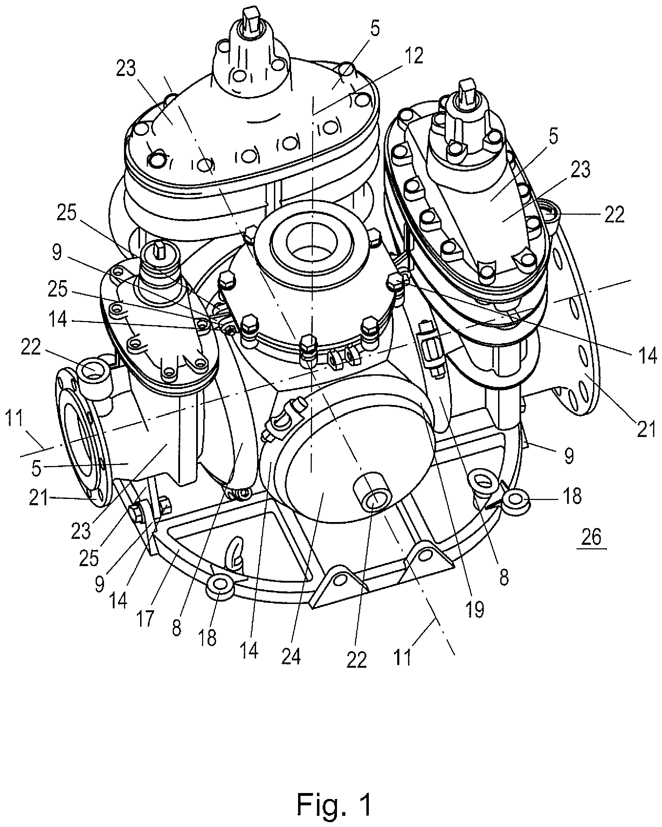

Fig. 1 zeigt eine Schrägansicht einer erfindungsgemäßen, zusammengesetzten, modularen Vorrichtung mit einem Verteilerkörper 1 sowie mehreren Anbaukomponenten 5. Als Anbaukomponenten 5 können beispielsweise Schieber, Reduzierschieber, Deckel, Deckel mit Injektionsöffnungen, Rohre, Hydranten oder ähnliche Anbaukomponenten eingesetzt werden. In der vorliegenden Ausführungsform sind drei Schieber 23 und ein Deckel 24 vorgesehen. Die Schieber 23 sowie der Deckel 24 weisen Injektionsöffnungen 22 auf. Ferner umfassen die Schieber 23 jeweils einen Rohrflansch 21 zum Anschluss der anzuschließenden Rohre. Die Verbindung der Anbaukomponenten 5 mit dem Verteilerkörper 1 geschehen über Verbindungsmittel 9 und Dichtverbindungsanordnungen 8.

In der vorliegenden Ausführungsform umfasst der Verteilerkörper 1 fünf Verteileröffnungen 3, die jeweils mit Anbaukomponenten 5 in Wirkkontakt gebracht sind. Vier der Anbauöffnungen 3 umfassen Anbaukomponenten 5 die entlang der Rohrachsen 11 angeordnet sind. Die Rohrachsen 11 liegen in der vorliegenden Ausführung in einer Ebene, bevorzugt in der Vertikalebene und sind 90° zueinander versetzt. Alternativ können die Rohrachsen 11 auch andere Winkel zueinander aufweisen und gegebenenfalls in einer von der vertikalen Ebene abweichenden Richtung abzweigen. Die Rohrachsen 11 entsprechen im Wesentlichen den Rotationsachsen oder den Mittelachsen der anzuschließenden Rohre und weiters auch der Strömungsrichtung des in den Rohren und den Anbaukomponenten 5 strömenden Mediums. Darüber hinaus ist eine Öffnung für eine Anbaukomponente 5 entlang der Zusatzrohrachse 12 vorgesehen. Diese verläuft beispielsweise normal auf jene Ebene, in der die Rohrachsen 11 liegen. Sie ist bevorzugt vertikal verlaufend und kann beispielsweise dazu verwendet werden einen Hydranten oder ein vertikales Steigrohr vorzusehen.

Um eine einfache Montage und Wartung der Vorrichtung zu ermöglichen, sind die meisten, bevorzugt alle Verbindungselemente 14 von oben bzw. von der gewünschten Zugriffsseite bedienbar. Im Falle der Anbaukomponente 5, die entlang der Zusatzrohrachse 12 verläuft, sind die Verbindungselemente 14 als Sechskantschrauben ausgeführt, welche von oben betätigt werden können. Im Falle der Dichtverbindungsanordnungen 8 beispielsweise sind die Verbindungselemente 14 radial bedienbar.

Der Deckel 24 ist über die Dichtverbindungsanordnung 8 mit dem Verteilerkörper 1 verbunden. Die Dichtverbindungsanordnung umfasst einen Klemmring 19 sowie einen innenliegenden Dichtring 20. Zum Festspannen des Klemmrings 19 sind Verbindungselemente 14 vorgesehen. Diese Verbindungselemente 14 sind im vorliegenden Fall als Gewindeschraube mit Mutter ausgeführt.

Durch Festziehen der Schraube wird der Ring um die Verbindungsstelle 33 gespannt. Durch die Spannung wird der Dichtring an die abzudichtende Stelle, und/oder an den Dichtring gedrückt.

Zur Verbindung der Anbaukomponenten 5 mit dem Verteilerkörper 1 sind Verbindungsmittel 9 sowie die Dichtverbindungsanordnung 8 vorgesehen. Die Dichtverbindungsanordnung 8 entspricht im Wesentlichen der Dichtverbindungsanordnung 8, die auch zur Montage des Deckels 24 vorgesehen ist. Die Verbindungsmittel 9 dienen der Verbindung und Positionierung der Anbaukomponente mit dem Verteilerkörper 1, wobei die starre Verbindung derart ausgeführt ist, dass zwischen dem Verteilerkörper 1 und der Anbaukomponente 5 ein Spalt 13 gebildet ist. Dieser Spalt 13 ist in weiterer Folge von der Dichtverbindungsanordnung 8 abgedichtet. Zur starren Positionierung der Anbaukomponente 5 gegenüber dem Verteilerkörper 1 sind Verbindungsmittel 9, in diesem Fall drei Verbindungsmittel 9 pro Anbaukomponente 5 vorgesehen. Die Verbindungsmittel 9 umfassen Verbindungselemente 14 und Abstandselemente 15. Die Abstandselemente 15 sind in der vorliegenden Form als Montagerahmen 17 sowie als Fortsätze 25 ausgebildet. Im unteren Bereich der Vorrichtung sind Abstandelemente 15 als Montagerahmen 17 ausgeführt. Die Anbaukomponente 5 weist einen Fortsatz 25 auf. Der Fortsatz 25 und der Montagerahmen 17 können über das Verbindungselement 14 miteinander verbunden werden. Im oberen Bereich sind am Verteilerkörper 1 und an der Anbaukomponente 5 jeweils zumindest ein Fortsatz 25 angeordnet. Die beiden Fortsätze 25, die eine Ausführungsform der Abstandselemente 15 darstellen, sind über Verbindungselemente 14 miteinander verbunden. Auch diese Verbindungselemente 14 sind als Sechskantschrauben mit aufgesetzten Muttern ausgeführt. Die Abstandelemente 15, insbesondere die Fortsätze 25 des Verteilerkörpers 1, sind als angegossene Laschen mit Durchgangsöffnungen ausgeführt. Auch die Fortsätze 25 des Schiebers können am Gehäuse des Schiebers 23 angegossen sein. Jedoch ist, wie erwähnt die starre Verbindung auch über Schweißverbindungen, Klemmverbindungen, Klebeverbindungen, Schraubverbindungen etc. möglich.

Auch der Montagerahmen 17 kann als eigenes, entfernbares Teil ausgeführt sein oder einstückig mit dem Verteilerkörper verbunden sein. Zur besseren Handhabbarkeit ist der Montagerahmen 17 fest mit dem Verteilerkörper 1 verbindbar, jedoch auch von diesem trennbar.

Am Montagerahmen sind ferner Befestigungsvorrichtungen 18 zur Befestigung des Montagerahmens 17 und/oder der gesamten Vorrichtung am Untergrund 26 vorgesehen.

Die erfindungsgemäße Vorrichtung erlaubt einen Austausch der einzelnen Anbaukomponenten 5. Beispielsweise kann zur Bildung eines neuen Anschlusses an den Verteilerkörper der Deckel 24 durch einen Schieber 23 und ein daran angeschlossenes Rohr ersetzt werden. Auch der Austausch von Schiebern ist durch die erfindungsgemäße Vorrichtung möglich. So haben Schieber in der Regel eine begrenzte Lebensdauer und müssen nach einer bestimmten Zeit getauscht werden. Auch dieser Tausch ist durch die vorliegende Erfindung vereinfacht.

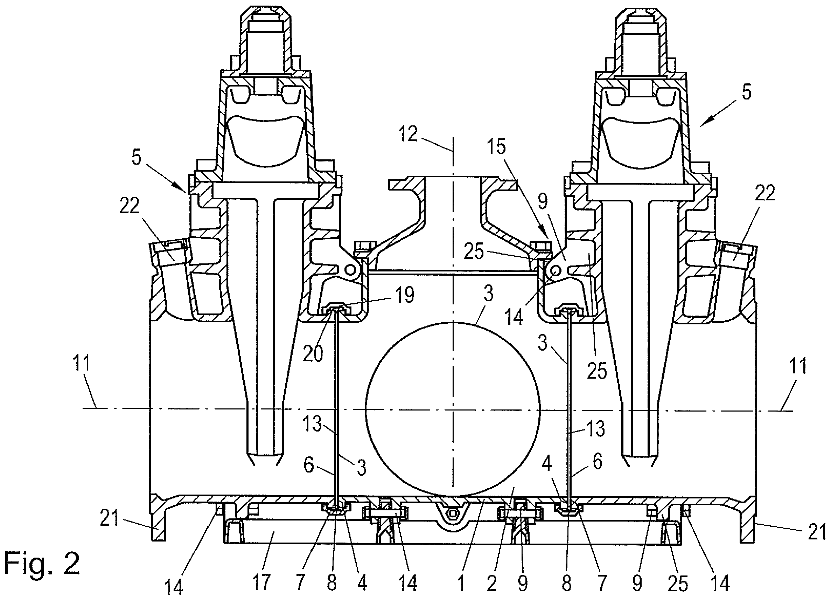

Fig. 2 zeigt eine schematische Schnittdarstellung, wobei die Schnittebene der Zusatzrohrachse 12 und zwei Rohrachsen 11 folgt. In üblicher Einbaulage verläuft die Schnittebene somit vertikal.

Die Vorrichtung umfasst einen Verteilerkörper 1 mit einem Verteilerraum 2, der sich über Verteileröffnungen 3 durch den Verteilerkörper 1 nach außen Richtung Anbaukomponenten 5 erstreckt. Die Verteileröffnungen 3 sind jeweils von einer Verteilerstirnfläche 4 umgeben.

Die Anbaukomponenten 5 weisen ebenfalls Öffnungen, insbesondere Anbauöffnungen 6 auf. Die Anbauöffnungen 6 sind von Anbaustirnflächen 7 umgeben.

In der vorliegenden Ausführungsform liegen die Anbaustirnflächen 7 sowie Verteilerstirnflächen 4 jeweils in einer Normalebene der zugehörigen Rohrachse 11.

Zur Verbindung einer Anbaukomponente 5 mit dem Verteilerkörper 1 sind eine Dichtverbindungsanordnung 8 sowie Verbindungsmittel 9 vorgesehen. Zwischen dem Verteilerkörper 1 und der Anbaukomponente 5 und/oder zwischen der Anbaustirnfläche 7 und der Verteilerstirnfläche 4 ist ein Spalt 13 vorgesehen. Dieser Spalt ist durch die Dichtverbindungsanordnung 8, insbesondere durch den Dichtring 20 und den Klemmring 19 abgedichtet. Die Verbindungsmittel 9 sind eingerichtet, um eine starre Verbindung zwischen der Anbaukomponente 5 und dem Verteilerkörper 11 herzustellen. Erfindungsgemäß ist diese starre Verbindung derart ausgeführt, dass zwischen den beiden Teilen ein Spalt 13 besteht. Die Verbindungsmittel 9 sind an unterschiedlichen Stellen unterschiedlich ausgeführt. In der vorliegenden Darstellung werden die Verbindungsmittel anhand der rechten Anbaukomponente weiter beschrieben:
Im oberen Bereich sind die Verbindungsmittel 9 als Fortsätze 25 ausgeführt und durch Verbindungselemente 14 verbunden. Die Fortsätze 25 sind dabei Ausformungen der allgemeinen Abstandselemente 15, die mit dem Verteilerkörper 1 oder mit der Anbaukomponente 5 starr verbunden oder auch einstückig ausgeführt sind.
Insbesondere können die Abstandselemente 15 angegossen, angeschweißt, verklebt, angeschraubt und/oder angenietet sein.

Zur Verbindung im oberen Bereich weisen die Fortsätze 25 Öffnungen auf, durch welche die Verbindungselemente 14, insbesondere die dargestellten Schrauben durchgeführt und verschraubt werden können. Im oberen Bereich ist somit eine scharnierartige Verbindung gegeben, die eine Drehung der Anbaukomponente um die Schraubenachse ermöglicht. Die Schraubenachse verläuft in der vorliegenden Ansicht projizierend. Diese Drehbewegung ist nur dann möglich, wenn die Anbaukomponente 5 an keiner sonstigen Stelle durch Reib- oder Formschluss mit weiteren Teilen verbunden ist.

Im dargestellten unteren Bereich umfassen die Verbindungsmittel 9 Abstandselemente 15, die über Verbindungselemente 14 starr verbunden werden können. Insbesondere sind die Abstandselemente 15 als Montagerahmen 17 und Fortsätze 25 ausgebildet. Der Montagerahmen 17 ist dabei starr mit dem Verteilerkörper 1 verbunden und erstreckt sich im Wesentlichen entlang einer zu den Rohrachsen 11 parallelen Ebene. Es entspricht jedoch auch dem Erfindungsgedanken, im unteren Bereich eine ähnliche Ausführung der Verbindungsmittel 9 vorzusehen, wie im dargestellten oberen Bereich. Der Montagerahmen 17 hat in der vorliegenden Ausführung den Vorteil, dass über diesen auch die Befestigung der gesamten Vorrichtung am Untergrund 26 erfolgen kann. Insbesondere bei genormter Ausgestaltung des Untergrundes zur Befestigung der Vorrichtung muss ein gewisser Abstand der Befestigungselemente vorgesehen sein. Um flexibel auf diese jeweiligen, von Land zu Land unterschiedlichen, Dimensionen eingestellt zu sein, kann der Montagerahmen 17, insbesondere die Befestigungsvorrichtungen 18 zur Befestigung am Untergrund angepasst werden, ohne dabei die gesamte Konstruktion ändern zu müssen.

Die starre Verbindung der Anbaukomponenten 5 zum Verteilerkörper 1 kann erfindungsgemäß ein gewisses Spiel aufweisen. Dieses Spiel ermöglicht beispielsweise die Anpassung des Spaltes, des Abstands und der Lage der Verteilerstirnfläche 4 zur Anbaustirnfläche 7 sowie der Zentrierung der Anbaukomponenten 5 gegenüber dem Verteilerkörper 1 durch den Klemmring 19 der Dichtverbindungsanordnung 8. Ferner sind an den vorgesehenen Schiebern Injektionsöffnungen 22 vorgesehen. Diese dienen beispielsweise der Beimengung von Chlor in Trinkwasser. Zur besseren Erreichbarkeit sind diese an der dargestellten Oberseite der Schieber vorgesehen. Die Positionierung der Injektionsöffnungen am Schieber bietet dabei den Vorteil, dass keine weitere Komponente an den Schieber zur Platzierung einer Injektionsöffnung vorgesehen sein muss. Der Schieber selbst umfasst somit die Injektionsöffnung. Ein weiterer Vorteil ist, dass für die Bedienung der Schieber ein Schachtzugang vorgesehen sein muss. Durch diesen Schachtzugang kann auch die Injektionsöffnung 22 und die dazu benötigte Injektionsvorrichtung bedient werden. Es ist somit kein separater Schacht notwendig.

An den Schieber selbst können über den Rohrflansch 21 die zu verbindenden Rohre befestigt werden. Eine Flanschverbindung stellt dabei eine mögliche Ausführungsform dar. Grundsätzlich sind jedoch alle Verbindungsmöglichkeiten dem Erfindungsgedanken entsprechend, die eine Verbindung eines Rohres mit einem Schieber erlauben.

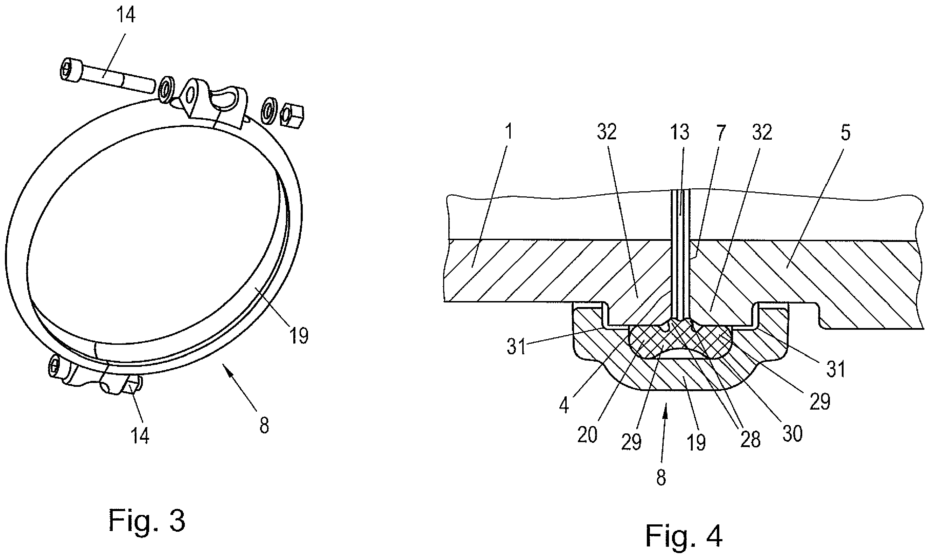

Fig. 3 zeigt eine Schrägansicht von Teilen der erfindungsgemäßen Dichtverbindungsanordnung 8. Diese umfasst den Klemmring 19, sowie Verbindungselemente 14. Der Klemmring 19 ist zweiteilig ausgeführt und kann entlang einer Trennlinie 27 in zwei C-förmige Klemmringsegmente geteilt werden. Diese Teilung ermöglicht es, den Klemmring in radialer Richtung zu montieren. In radialer Richtung bedeutet in diesem Zusammenhang, dass der Klemmring in einer Normalebene zur Rohrachse 11 zugeführt und befestigt werden kann. Dazu werden die beiden C-förmigen Segmente voneinander getrennt, von zwei gegenüberliegenden Seiten auf die Verbindungsstelle 33 des Verteilerkörpers 1 und der Anbaukomponente 5 gelegt und mit den Verbindungselementen 14 miteinander verbunden. Bei der Verbindung werden die beiden C-förmigen Klemmringsegmente zueinander und zu der Verbindungsstelle 33 gezogen. Die Verbindungselemente 14 des Klemmrings 19 verlaufen im Wesentlichen tangential und sind tangential bzw. aus radialer Richtung bedienbar. Dies bedeutet, dass beispielsweise als Schrauben ausgeführte Verbindungselemente eine im Wesentlichen zum Klemmring tangential verlaufende Drehachse aufweisen und von außen in radialer Richtung bedienbar sind. Bei Verbindungselementen wie z.B. Spannhebeln erfolgt eine Umlegung des Hebels ebenfalls derart, dass eine Bedienung in radialer Richtung möglich ist.

Fig. 4 zeigt eine Detailansicht der Dichtverbindungsanordnung 8 in montiertem Zustand. Der Verteilerkörper 1 und die Anbaukomponente 5 sind beabstandet zueinander positioniert, sodass zwischen der Verteilerstirnfläche 4 und der Anbaustirnfläche 7 ein Spalt 13 vorgesehen ist. Die Dichtverbindungsanordnung 8 umfasst einen Klemmring 19 und einen Dichtring 20. Zur Montage des Dichtringes 20 wird selbiger über ein Ende des Verteilerkörpers oder der Anbaukomponente geschoben. Dann werden der Verteilerkörper und die Anbaukomponente über Verbindungsmittel beabstandet zueinander starr verbunden. In weiterer Folge wird der Dichtring 20 über den Spalt 13 geschoben. Der Dichtring weist einen oder mehrere Dichtfortsätze 28 auf, die von dem rundum verlaufenden Dichtkörper 29 in den Spalt 13 und/oder zwischen die Anbaustirnfläche 7 und die Verteilerstirnfläche 4 ragen. Die Dichtfortsätze verbessern einerseits die Dichtwirkung und andererseits ist durch sie die Montage erleichtert. So kann durch Eindrücken der Dichtfortsätze 28 in den Spalt 13 erkannt werden, ob die Dichtung mittig über den Spalt platziert ist. Der Dichtring rastet somit an der vorgesehenen Stelle ein.

In weiterer Folge wird der Klemmring montiert und festgezogen. Der Dichtring 20 umfasst eine Dichtungsnut 30. Diese Dichtungsnut ist umlaufend im Dichtungsring vorgesehen und dient der Aufnahme des Dichtungsrings 20. Durch Festziehen ist zwischen der Anbaukomponente bzw. dem Verteilerkörper und der Dichtungsnut ein Spalt gebildet, welcher bevorzugt kleiner ist als die Dicke des Dichtrings 20 in diesem Bereich. Dadurch wird die Dichtung zwischen dem Klemmring und den zu verbindenden Teilen gequetscht. Ferner weist der Klemmring 19 eine oder mehrere Zentriernuten 31 auf. Die Zentriernut 31 umgreift dabei eine Schulter 32 des Verteilerkörpers 1 und/oder der Anbaukomponente 5. Durch die spezielle Ausgestaltung der Dichtverbindungsanordnung 8 ist somit einerseits die Abdichtung des Spaltes 13 sowie andererseits eine Unterstützung und Zentrierung des Verteilerkörpers 1 gegenüber der Anbaukomponente 5 gegeben.

### Bezugszeichen:

1. Verteilerkörper
2. Verteilerraum
3. Verteileröffnung
4. Verteilerstirnfläche
5. Anbaukomponente
6. Anbauöffnung
7. Anbaustirnfläche
8. Dichtverbindungsanordnung
9. Verbindungsmittel
10. Montagerahmen
11. Rohrachsen
12. Zusatzroh rachse
13.Spalt
14. Verbindungselemente
15. Abstandselemente
16. Freistellungen / Freiraum
17. Montagerahmen
18. Befestigungsvorrichtungen (der gesamten Vorrichtung)
19. Klemmring
20. Dichtring
21. Rohrflansch
22. Injektionsöffnung
23.Schieber
24. Deckel
25. Fortsatz(Abstandelement)
26. Untergrund
27. Trennlinie klemmring
28. Dichtfortsatz
29. Dichtkörper
30. Dichtungsnut
31.Zentriernut
32. Schulter
33. Verbindungsstelle

## Patentansprüche

1. Vorrichtung zur modularen Bildung von Rohrkreuzungen umfassend einen Verteilerkörper (1) und Anbaukomponente (5), wie beispielsweise Schieber, Deckel, Rohre, Hydranten oder ähnliche, wobei der Verteilerkörper (1) zumindest drei bevorzugt fünf über einen Verteilerraum (2) miteinander verbundene Verteileröffnungen (3) aufweist, die mit Anbauöffnungen (6) von den Anbaukomponenten (5) verbindbar sind,
wobei zumindest eine Verteileröffnung (3) von einer Verteilerstirnfläche (4) und zumindest eine Anbauöffnung (6) von einer Anbaustirnfläche (7) umgeben ist, wobei zur Verbindung der Anbaukomponente (5) mit dem Verteilerkörper (1) Verbindungsmittel (9) zur beabstandeten Positionierung der Anbaustirnfläche (7) zur Verteilerstirnfläche (4) und eine Dichtverbindungsanordnung (8) vorgesehen sind,
**dadurch gekennzeichnet, dass**
die Verbindungsmittel (9) Abstandselemente (15) umfassen, die über Verbindungselemente (14) starr verbunden werden können,
dass zwischen dem Verteilerkörper(1) und der Anbaukomponente (5) ein Spalt (13) freigehalten ist und dass die Dichtverbindungsanordnung (8) einen Dichtring (20) umfasst, der den Spalt (13) umfangsseitig umgibt.

2. Vorrichtung nach Anspruch 1, **dadurch gekennzeichnet, dass** zur Abdichtung des Spaltes (13) und gegebenenfalls zur Positionierung der Anbaukomponente (5) gegenüber dem Verteilerkörper (1) die Dichtverbindungsanordnung (8) vorgesehen ist.

3. Vorrichtung nach einem der Ansprüche 1 oder 2, **dadurch gekennzeichnet, dass** der Dichtring (20) einen Dichtfortsatz (28) umfasst, der in montierter Stellung zumindest teilweise in den Spalt (13) ragt.

4. Vorrichtung nach einem der Ansprüche 1 bis 3, **dadurch gekennzeichnet, dass** der Dichtring (20) einen Dichtkörper (29) umfasst, der in montierter Stellung den Verteilerkörper (1) und die Anbaukomponente (5) umfangsseitig berührt.

5. Vorrichtung nach einem der Ansprüche 1 bis 4, **dadurch gekennzeichnet, dass** der Dichtring (20) ein aus dem Dichtfortsatz (28) und dem Dichtkörper (29) gebildetes T-förmiges Profil aufweist, wobei der Dichtkörper (29) hohlzylinderförmig ausgebildet ist, und der Dichtfortsatz (28) an der Innenseite des hohlzylinderförmig ausgebildeten Dichtkörpers (29) mittig radial nach innen abstehend angeformt ist.

6. Vorrichtung nach einem der Ansprüche 1 bis 5, **dadurch gekennzeichnet, dass** die Dichtverbindungsanordnung (8) einen Klemmring (19) umfasst, der den den Spalt (13) und zumindest teilweise den Verteilerkörper (1) und die Anbaukomponente (5) umfangsseitig in radialer Richtung umgreift.

7. Vorrichtung nach Anspruch 6, **dadurch gekennzeichnet, dass** der Klemmring (19) öffenbar ausgeführt ist und zumindest zwei C-förmige Segmente umfasst, die über Verbindungselemente (14) miteinander verbindbar sind um in bevorzugter Weise einen im Wesentlichen starren, ringförmigen Körper zu bilden.

8. Vorrichtung nach Anspruch 7, **dadurch gekennzeichnet, dass** der Innendurchmesser des Klemmrings (19) durch Betätigung der Verbindungselemente (14) veränderbar ist, und dass durch Festziehen der Verbindungselemente (14) der Dichtring zur Abdichtung des Spaltes (13) gequetscht wird.

9. Vorrichtung nach Anspruch 8, **dadurch gekennzeichnet, dass** die Verbindungselemente (14) des Klemmrings (19) im Wesentlichen in einer Radialebene verlaufen und/oder bedienbar sind.

10. Vorrichtung nach einem der Ansprüche 1 bis 9, **dadurch gekennzeichnet, dass** die Abstandselemente (15) als Montagerahmen (17), Fortsatz (25), Lasche, an das Gehäuse der Anbaukomponente oder des Verteilerkörpers angegossener Fortsatz, mit dem Gehäuse der Anbaukomponente oder des Verteilerkörpers verbundener Fortsatz und/oder abstehender Steg ausgebildet sind.

11. Vorrichtung nach einem der Ansprüche 1 bis 10, **dadurch gekennzeichnet, dass** ein Montagerahmen (17) vorgesehen ist, der über Verbindungselemente (14) mit dem Verteilerkörper und mit zumindest einer, bevorzugt mit mehreren Anbaukomponenten (5) verbindbar ist.

12. Vorrichtung nach einem der Ansprüche 1 bis 11, **dadurch gekennzeichnet, dass** der Montagerahmen (17) eine Befestigungsvorrichtung zu Befestigung der Vorrichtung am Untergrund aufweist.

13. Vorrichtung nach einem der Ansprüche 1 bis 12, **dadurch gekennzeichnet, dass** über Schraubverbindungen der Spalt in seiner Breite justierbar ist und dass die Lage der Anbaukomponente zum Verteilerkörper in gewissem Maß bestimmbar, justierbar oder einstellbar ist.

## Claims

1. A device for the modular construction of pipe crossings comprising a manifold body (1) and an attachment component (5), such as for example slide valves, covers, pipes, hydrants or the like, wherein the manifold body (1) comprises at least three, preferably five, manifold openings (3) which are connected to each other via a manifold chamber (2) and which are connectable to attachment openings (6) of the attachment components (5),
wherein at least one manifold opening (3) is surrounded by a manifold front face (4) and at least one attachment opening (6) is surrounded by an attachment front face (7), wherein connecting means (9) for positioning the attachment front face (7) at a distance from the manifold front face (4) and a sealing connection arrangement (8) are provided for connecting the attachment component (5) to the manifold body (1),
**characterised in that** the connecting means (9) comprise spacer elements (15) which may be rigidly connected via connecting elements (14),
**in that** a gap (13) is kept clear between the manifold body (1) and the attachment component (5) and **in that** the sealing connection arrangement (8) comprises a seal ring (20) which surrounds the gap (13) circumferentially.

2. The device according to claim 1, **characterised in that** the sealing connection arrangement (8) is provided for sealing the gap (13) and possibly for positioning the attachment component (5) opposite the manifold body (1) .

3. The device according to any of claim 1 or 2, **characterised in that** the seal ring (20) comprises a seal projection (28) which in the mounted position protrudes at least partially into the gap (13).

4. The device according to any of claims 1 to 3, **characterised in that** the seal ring (20) comprises a sealing body (29) which in the mounted position contacts the manifold body (1) and the attachment component (5) circumferentially.

5. The device according to any of claims 1 to 4, **characterised in that** the seal ring (20) comprises a T-shaped profile formed by the seal projection (28) and the sealing body (29), wherein the sealing body (29) is of hollow cylindrical configuration and the seal projection (28) is formed centrally on the inner face of the sealing body (29) of hollow cylindrical configuration so as to protrude radially inwardly.

6. The device according to any of claims 1 to 5, **characterised in that** the sealing connection arrangement (8) comprises a clamp ring (19) which circumferentially encompasses the gap (13) and at least partially encompasses the manifold body (1) and the attachment component (5) in the radial direction.

7. The device according to claim 6, **characterised in that** the clamp ring (19) is configured to be openable and comprises at least two C-shaped segments which are connectable via connecting elements (14), in order to preferably form a substantially rigid annular body.

8. The device according to claim 7, **characterised in that** the internal diameter of the clamp ring (19) is able to be altered by actuating the connecting elements (14) and **in that** by tightening the connecting elements (14) the seal ring is compressed in order to seal the gap (13).

9. The device according to claim 8, **characterised in that** the connecting elements (14) of the clamp ring (19) extend and/or are able to be operated substantially in a radial plane.

10. The device according to any of claims 1 to 9, **characterised in that** the spacer elements (15) are configured as a mounting frame (17), a projection (25), a tab, a projection cast onto the housing of the attachment component or the manifold body, a projection connected to the housing of the attachment component or the manifold body and/or as a protruding web.

11. The device according to any of claims 1 to 10, **characterised in that** a mounting frame (17) is provided, said mounting frame being able to be connected via connecting elements (14) to the manifold body and to at least one, preferably to a plurality of, attachment component(s) (5).

12. The device according to any of claims 1 to 11, **characterised in that** the mounting frame (17) comprises a fastening device for fastening the device to the ground.

13. The device according to any of claims 1 to 12, **characterised in that** the gap is able to be adjusted in its width via screw connections, and **in that** the position of the attachment component relative to the manifold body may be determined, adjusted or set to a certain extent.

## Revendications

1. Dispositif pour la création modulaire de croisements de tubes, comprenant un corps de distributeur (1) et des composants rapportés (5) comme par exemple des coulisseaux, des couvercles, des tubes, des bouches d'incendie ou analogues, le corps de distributeur (1) comportant trois, de préférence cinq orifices de distribution (3) assemblés les uns aux autres sur un espace de distribution (2), qui peuvent être assemblés sur des orifices de montage (6) des composants rapportés (5),
au moins un orifice de distribution (3) étant entouré d'une face de distributeur (4) et au moins un orifice de montage (6) étant entouré d'une face de montage (7), pour l'assemblage des composants rapportés (5) avec le corps de distributeur (1) étant prévus des moyens d'assemblage (9) destinés à positionner avec un écart la face de montage (7) par rapport à la face de distributeur (4) et un agencement d'assemblage étanche (8),
**caractérisé en ce que** les moyens d'assemblage (9) comprennent des éléments espaceurs (15) que l'on peut assembler de manière rigide par l'intermédiaire d'éléments d'assemblage (14),
**en ce qu'**entre le corps de distributeur (1) et les composants rapportés (5) est gardée libre une fente (13) et **en ce que** l'agencement d'assemblage étanche (8) comprend une bague d'étanchéité (20) qui entoure la fente (13) sur le pourtour.

2. Dispositif selon la revendication 1, **caractérisé en ce que** pour assurer l'étanchéité de la fente (13) et le cas échéant pour positionner les composants rapportés (5) vis-à-vis du corps de distributeur (1) est prévu l'agencement d'assemblage étanche (8).

3. Dispositif selon l'une quelconque des revendications 1 ou 2, **caractérisé en ce que** la bague d'étanchéité (20) comprend un prolongement d'étanchéité (28) qui lorsqu'il est monté saillit au moins partiellement dans la fente (13).

4. Dispositif selon l'une quelconque des revendications 1 à 3, **caractérisé en ce que** la bague d'étanchéité (20) comprend un corps d'étanchéité (29), qui lorsqu'il est monté touche du côté périphérique le corps de distributeur (1) et les composants rapportés (5).

5. Dispositif selon l'une quelconque des revendications 1 à 4, **caractérisé en ce que** la bague d'étanchéité (20) présente un profil en forme de T formé par le prolongement d'étanchéité (28) et le corps d'étanchéité (29), le corps d'étanchéité (29) étant conçu en forme de cylindre creux et le prolongement d'étanchéité (28) étant rapporté par formage au centre, en débordant vers l'intérieur en direction radiale sur la face interne du corps d'étanchéité (29) conçu sous la forme d'un cylindre creux.

6. Dispositif selon l'une quelconque des revendications 1 à 5, **caractérisé en ce que** l'agencement d'assemblage étanche (8) comprend une bague de serrage (19) qui entoure la fente (13) et au moins partiellement le corps de distributeur (1) et les composants rapportés (5) du côté périphérique, dans la direction radiale.

7. Dispositif selon la revendication 6, **caractérisé en ce que** la bague de serrage (19) est conçue pour pouvoir s'ouvrir et comprend au moins deux segments en forme de C, qui peuvent être assemblés l'un à l'autre par l'intermédiaire d'éléments d'assemblage (14) pour former de manière préférentielle un corps de forme annulaire, essentiellement rigide.

8. Dispositif selon la revendication 7, **caractérisé en ce que** le diamètre intérieur de la bague de serrage (19) est variable par actionnement des éléments d'assemblage (14) et **en ce que** par serrage des éléments d'assemblage (14), la bague d'étanchéité s'écrase pour assurer l'étanchéité de la fente (13).

9. Dispositif selon la revendication 8, **caractérisé en ce que** les éléments d'assemblage (14) de la bague de serrage (19) s'écoulent et/ou peuvent être manoeuvrés essentiellement dans un plan radial.

10. Dispositif selon l'une quelconque des revendications 1 à 9, **caractérisé en ce que** les éléments espaceurs (15) sont conçus sous la forme d'un cadre de montage (17), d'un prolongement (25), d'une patte, d'un prolongement surmoulé sur le boîter des composants rapportés ou du corps de distributeur, d'un prolongement assemblé avec le boîtier des composants rapportés ou du corps de distributeur et/ou de languette débordante.

11. Dispositif selon l'une quelconque des revendications 1 à 10, **caractérisé en ce qu'**il est prévu un cadre de montage (17), qui par l'intermédiaire d'éléments d'assemblage (14) peut s'assembler avec le corps de distributeur et avec au moins un, de préférence avec plusieurs composants rapportés (5).

12. Dispositif selon l'une quelconque des revendications 1 à 11, **caractérisé en ce que** le cadre de montage (17) comporte un dispositif de fixation pour fixer le dispositif sur le support.

13. Dispositif selon l'une quelconque des revendications 1 à 12, **caractérisé en ce que** par des assemblages par vis, la fente est ajustable dans la largeur et **en ce que** la position des composants rapportés par rapport au corps de distributeur est déterminable, ajustable ou réglable dans une certaine mesure.
